# EUROPÄISCHE PATENTSCHRIFT

(11) **EP 2 388 287 B1**
(45) Veröffentlichungstag und Bekanntmachung des Hinweises auf die Patenterteilung: **17.04.2013**
(21) Anmeldenummer: 10005164.8
(22) Anmeldetag: 18.05.2010
(51) Int. Cl.: C08J 9/00, C08J 9/28

(54) **Verbund-Werkstoff**
Composite material
Matière première composite

(43) Veröffentlichungstag der Anmeldung: 23.11.2011
(73) Patentinhaber: Cognis IP Management GmbH, 40589 Düsseldorf (DE)
(72) Erfinder: Birnbrich, Paul, 42719 Solingen (DE); Thomas, Hans-Josef, 41352 Korchenbroich (DE); Stahlhut-Behn, Dagmar, 40699 Erkrath (DE)

(56) Entgegenhaltungen:
- EP-A1- 2 186 842
- EP-A2- 1 518 875
- WO-A1-2007/095730
- DE-A1- 3 730 823
- US-A- 4 818 453

## Beschreibung

### Gebiet der Erfindung

Die Erfindung betrifft spezielle Verbund-Werkstoffe sowie deren Verwendung von bestimmten nanoporösen Polymerschaumstoffen als Wärmedämm-Materialien.

### Stand der Technik

Polymere Epoxidharze sind seit langem bekannt. Sie werden in aller Regel durch Umsetzung von Polyepoxiden mit im Mittel mindestens zwei terminalen oder lateralen Epoxidgruppen pro Molekül mit Härtern, insbesondere aminischen Härtern, bei denen es sich um Di- oder Polyamine handelt, hergestellt. Diese polymeren Epoxidharze haben vielfältige Anwendungsgebiete, wobei die Verwendung als Lacke und Beschichtungsmassen (Aufbringung einer Deckschicht auf ein Substrat), dominieren.

EP-A-1,518,875 beschreibt spezielle Härter für wasserbasierte Epoxidharzsysteme, wobei diese Härter erhältlich sind, indem man eine Mischung von (a) mindestens einem epoxidierten Polyalkylenoxid, ausgewählt aus der Gruppe der epoxidierten Polyethylenoxide, der epoxidierten Polypropylenoxide und der Polyethylenpropylenoxide, (b) mindestens einer epoxidierten aromatischen Hydroxyverbindung ausgewählt aus der Gruppe der Bisphenol-A-Epoxide und der Bisphenol-F-Epoxide und (c) mindestens einer aromatischen Hydroxyverbindung, ausgewählt aus der Gruppe Bisphenol-A und Bisphenol-F zu einem Zwischenprodukt umsetzt und dieses Zwischenprodukt anschließend mit einem Polyamin umsetzt. Offenbart ist auch die Verwendung dieser Härter zur Herstellung von Klarlacken und Beachichtungsmassen (Aufbringung einer Deckschicht auf ein Substrat, zum Beispiel für Fußbodenbeschichtungen).

WO 2007/095730 A1 beschreibt hochgefüllte Komposit-Materialien. Diese enthalten Mischungen von (a) eines Epoxid-basierten Harzsystems oder eines Polyurethanbasiertes Präpolymer-Harzsystem und (b) Verstärkungsmaterialien, die darin dispergiert sind.

### Beschreibung der Erfindung

Aufgabe der vorliegenden Erfindung war es, nanoporöse Polymerschaumstoffe bereitzustellen, die sich als Wärmedämm-Materialien eignen. Insbesondere sollten diese Materialien eine geringe Wärmeleitfähigkeit (vorzugsweise unterhalb von 0,09 W/m*K) und hohe mechanische Festigkeit (maximale Druckspannung vorzugsweise oberhalb von 1,0 Mpa) aufweisen.

Gegenstand der vorliegenden Erfindung ist

zunächst ein
Verbund-Werkstoff, enthaltend (i) einen nanoporösen Polymerschaumstoff, erhältlich durch Umsetzung von ein oder mehreren Epoxidharzen mit einem oder mehreren amphiphilen Epoxidharzhärtern in Wasser im Sinne einer Phaseninversionspolymerisation, und (ii) ein oder mehrere anorganische Füllstoffe und/oder anorganische Fasern, mit der Maßgabe, dass Glashohlkugeln als Füllstoffe ausgeschlossen sind, und der Maßgabe, dass die Komponente (ii) wärmeisolierende Eigenschaften aufweist und der Maßgabe, dass man solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens einee aromatische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt, und ferner der Maßgabe, dass der Verbund-Werkstoff die Komponenten (i) und (ii) in der Weise enthält, dass die Komponente (ii) in eine Matrix aus der Komponente (i) eingebunden ist.

Der Verbund-Werkstoff enthält die Komponenten (i) und (ii) in der Weise, dass die Komponente (ii) in eine Matrix aus der Komponente (i) eingebunden ist; dabei ist es bevorzugt, die Komponente (ii) im Zuge der Herstellung der Komponente (i) durch Phaseninversionspolymerisation einzubringen.

Ein weiterer Erfindungsgegenstand ist die Verwendung der erfindungsgemäßen Verbund-Werkstoffe als Wärmedämm-Materialien bei Transportmitteln und im Industrie- und Anlagenbau.

Wie oben ausgeführt zielt die erfindungsgemäße Verwendung auf die Wärmedämm-Materialien bei Transportmitteln und im Industrie- und Anlagenbau. Beispiele für Transportmittel sind etwa Automobile, Schiffe, Flugzeuge, Schienenfahrzeuge und dergleichen, Beispiele für den Industrie- und Anlagenbau sind etwa Behälter, Kessel, Rohrleitungen, Heizungsanlagen, Solaranlagen und dergleichen. Ausdrücklich sei festgestellt, dass der Bereich der Wärmedammsysteme zur Gebäudeisolierung ausgenommen ist, also nicht zur erfindungsgemäßen Verwendung zählt.

Unter nanoporösen Polymerschaumstoffen (i) sind Polymere zu verstehen, die innere Hohlräume aufweisen. Dabei handelt es sich um schwammartige Strukturen, die sowohl Makro- als auch Mikroporen aufweisen, wobei die Mikroporen dominieren und wobei die Mikroporen mittlere Querschnitte im Bereich von 10 bis 500 nm und insbesondere von 10 bis 100 nm aufweisen.

Die Natur der anorganischen Füllstoffe und/oder anorganischen Fasern (ii) unterliegtausser der oben bereits genannten Maßgabe, dass Glashohlkugeln als Füllstoffe ausgeschlossen sind - an sich keiner Beschränkung. Als Komponente (ii) der erfindungsgemäßen Verbund-Werkstoffe können entweder ausschließlich anorganische Füllstoffe oder ausschließlich anorganische Fasern oder eine Kombination von anorganischen Füllstoffen und anorganischen Fasern eingesetzt werden.
Die Komponente (ii) weist wärmeisolierende Eigenschaften auf.
Vorzugsweise ist die Komponente (ii) im Verbund-Werkstoff in einer Menge im Bereich von 2 bis 90 Vol.-% - bezogen auf das Gesamtvolumen des Verbund-Werkstoffes - enthalten.
Die Raumform der anorganischen Füllstoffe ist beliebig, sie kann beispielsweise kugelförmig oder ellipsoid sein, aber auch eine unregelmäßige Geometrie aufweisen. Vorzugsweise setzt man anorganische Füllstoffe ein, deren maximaler Durchmesser im Bereich von 10 nm bis 5mm liegt.
Die innere Struktur der anorganischen Füllstoffe ist beliebig, so können die Füllstoffe in dem Sinne kompakt sein, dass sie keine inneren Hohlräume aufweisen, sie können jedoch auch innere Hohlräume aufweisen. In einer Variante weisen die inneren Hohlräume der Füllstoffe maximale Durchmesser im Bereich von 10 bis 1000 nm auf. Länge und Durchmesser der anorganischen Fasern unterliegen an sich keinen besonderen Beschränkungen. Vorzugsweise setzt man anorganische Fasern ein, deren maximaler Durchmesser im Bereich von 10 nm bis 5mm liegt.
Die innere Struktur der anorganischen Fasern ist beliebig, so können die Füllstoffe in dem Sinne kompakt sein, dass sie keine inneren Hohlräume aufweisen, sie können jedoch auch innere Hohlräume aufweisen. In einer Variante weisen die inneren Hohlräume der Fasern maximale Durchmesser im Bereich von 10 bis 1000 nm auf.

Die erfindungsgemäßen Verbund-Werkstoffe enthalten in einer Ausführungsform Substanzen, die die Brandschutz-Eigenschaften verbessern. Dies kann einerseits dadurch realisiert werden, dass die Verbindungen (ii) bereits an sich die Brandschutz-Eigenschaften der Verbund-Werkstoffe positiv beeinflussen, andererseits dadurch, dass weitere Substanzen in die Verbund-Werkstoffe integriert sind, was sich in besonders einfacher Weise im Zuge der Phaseninversionspolymerisation bewerkstelligen lässt. Ein Beispiel für solche geeigneten Brandschutz-Zusätze ist das Brandschutzmittel VP 5453/4 der Firma Cognis.

In einer Ausführungsförm sind in die Verbund-Werkstoffe ein oder mehrere Additive aus der Gruppe der Brandschutzadditive, Hydrophobierungsmittel und Biozide integriert.

Die erfindungsgemäßen Verbund-Werkstoffe zeichnen sich durch eine geringe Wärmeleitfähigkeit bei hoher mechanischer Festigkeit aus. Dies macht die Materialien in Hinblick auf die Verwendung als konstruktiven, mechanisch belastbaren Wärmedämm-Materialien besonders attraktiv.

### Zu den Epoxidharzen (E)

Bei den Epoxidverbindungen (E) handelt es sich um Polyepoxide mit im Mittel mindestens zwei terminalen oder lateralen Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche.
Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren).
Die Epoxidäquivalentgewichte dieser Epoxidverbindungen liegen vorzugsweise zwischen 85 und 3200, insbesondere zwischen 170 und 830. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt

Auch die Polyglycidylether von mehrwertigen Alkoholen sind als Verbindungen (E) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin, Isosorbid und Bis-(4-hydroxycyclohexyl)-2,2-propan genannt.

Es können auch Polyglycidylether von Polycarbonsäuren als Verbindungen (F) verwendet werden, die man durch die Umsetzung von Epichlorhydrin oder ähnlichen E-poxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Es können auch Mischungen von mehreren Epoxidverbindungen (E) verwendet werden.

Bei der Herstellung von nanoporösen Polymerschaumstoffen, bei der man wie oben gesagt die erfindungsgemäßen Härter (H) in wässrigem Milieu mit Epoxidverbindungen (E) im Sinne einer Phaseninversionspolymerisation (PIP) umsetzt, können optional zusätzliche dem Fachmann einschlägig bekannte Zusatzstoffe und/oder Verarbeitunghilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

### Zu den Epoxidharzhärtern (H)

Unter amphiphilen Epoxidharzhärtern (H) sind solche Epoxidharzhärter zu verstehen, die hydrophile und hydrophobe Strukturelemente aufweisen.

Vorzugsweise setzt man solche amphiphilen Epoxidharzhärter ein, die in Wasser bei 25 °C selbstemulgierend sind und die außerdem in der Lage sind, Epoxidharze (E) in Wasser bei 25 °C zu emulgieren.

Dabei setzt man solche Härter (H) ein, die erhältlich sind, indem man eine Mischung enthaltend
(A) mindestens einem epoxidierten Polyalkylenoxid, ausgewählt aus der Gruppe der epoxidierten Polyethylenoxide, der epoxidierten Polypropylenoxide und der Polyethylenpropylenoxide,
(B) mindestens einer epoxidierten aromatischen Hydroxyverbindung ausgewählt aus der Gruppe der Bisphenol-A-Epoxide und der Bisphenol-F-Epoxide und
(C) mindestens einer aromatischen Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt.

In einer Ausführungsform werden ausschließlich die Komponenten (A), (B) und (C) zu dem Zwischenprodukt umgesetzt und dieses weiter mit einem Polyamin (P) umgesetzt.

In einer weiteren Ausführungsform werden zur Herstellung des Zwischenproduktes, das anschließend mit den Polyaminen (P) zum Härters umgesetzt wird, neben den Verbindungen (A), (B) und (C) zusätzlich die Verbindungen (D) eingesetzt. Bei den Verbindungen (D) handelt es sich um Verbindungen aus der Gruppe der Triglycidylether von Triolen und der Diglycidylether von Diolen. Als Beispiele geeigneter Diole und Triole, die den Verbindungen (D) zu Grunde liegen, seien genannt: Ethylenglykol, Diethylenglykol, Triethylenglykol, 1,2-Propylenglykol, 1,3-Propylenglykol, 1,4-Butylenglykol, 1,5-Pentandiol, 1,6-Hexandiol, Cyclohexandiol, Cyclohexandimethanol, Neopentylglykol, 1,2,6-Hexantriol, Glycerin und Trimethylolpropan.

### Zu den Verbindungen (A)

Unter **epoxidierten Polyethylenoxiden** werden im Rahmen der Erfindung Verbindungen verstanden, die erhältlich sind, indem man die beiden terminalen OH-Gruppen von Polyethylenoxid in Oxirangruppen überführt, beispielsweise durch Umsetzung mit Epichlorhydrin. Das eingesetzte Polyethylenoxid kann dabei ein mittleres Molgewicht im Bereich von 80 bis 3000 aufweisen; es kann hergestellt werden, indem die Polymerisation des Ethylenoxids auf einem Alkylendiol mit C2-C18 in der dem Fachmann bekannten Weise gestartet wird.

Unter **epoxidierten Polypropylenoxiden** werden im Rahmen der Erfindung Verbindungen verstanden, die erhältlich sind, indem man die beiden terminalen OH-Gruppen von Polypropylenoxid in Oxirangruppen überführt, beispielsweise durch Umsetzung mit Epichlorhydrin. Das eingesetzte Polypropylenoxid kann dabei ein mittleres Molgewicht im Bereich von 110 bis 3000 aufweisen; es kann hergestellt werden, indem die Polymerisation des Propylenoxids auf einem Alkylendiol mit C2-C18 in der dem Fachmann bekannten Weise gestartet wird.

Unter **Polyethylenpropylenoxiden** werden im Rahmen der Erfindung Verbindungen verstanden, die erhältlich sind, indem man die beiden terminalen OH-Gruppen von Polyethylenpropylenoxid in Oxirangruppen überführt, beispielsweise durch Umsetzung mit Epichlorhydrin. Das eingesetzte Polyethylenpropylenoxid kann dabei ein mittleres Molgewicht im Bereich von 80 bis 3000 aufweisen. Unter Polyethylenpropylenoxid werden Verbindungen verstanden, die durch Copolymerisation von Ethylen- und Propylenoxid erhältlich sind, wobei die Polymerisation der beiden Reaktanden gleichzeitig oder blockweise durchgeführt werden kann, indem die Polymerisation des Propylenoxids und/oder des Ethylenoxids auf einem Alkylendiol mit C2-C18 in der dem Fachmann bekannten Weise gestartet wird.

Die Verbindungen (A) können einzeln oder im Gemisch miteinander eingesetzt werden.

### Zu den Verbindungen (B)

Unter **Bisphenol-A-Epoxiden** werden im Rahmen der Erfindung wie allgemein üblich Verbindungen verstanden, die erhältlich sind, indem man Bisphenol-A mit Epichlorhydrin umsetzt und/oder dieses durch Weitereaktion mit Bisphenol A polymerisiert. Diese Verbindungen sind daher auch unter der Bezeichnung Bisphenol-A-diglycidylether oder allgemein als Epoxidharze bekannt. Handelsübliche Produkte sind Epikote 828,1001, 1002, 1003, 1004 u. a. der Firma Shell.

Die Molekulargewichte der eingesetzten Bisphenol-A-epoxide liegen vorzugsweise im Bereich von 380 bis 3000

Unter **Bisphenol-F-Epoxiden** werden im Rahmen der Erfindung wie allgemein üblich Verbindungen verstanden, die erhältlich sind, indem man Bisphenol-F mit Epichlorhydrin umsetzt und/oder durch weitere Umsetzung mit Bisphenol F polymerisiert . Diese Verbindungen sind daher auch unter der Bezeichnung Bisphenol-F-Diglycidylether oder allgemein als Bisphenol F Epoxidharze bekannt.

Die Molekulargewichte der eingesetzten Bisphenol-F-epoxide liegen vorzugsweise im Bereich von 350 bis 3000.

Die Verbindungen (B) können einzeln oder im Gemisch miteinander eingesetzt werden.

### Zu den Verbindungen (C)

**Bisphenol-A** ist dem Fachmann einschlägig bekannt und wird durch folgende Formel charakterisiert:

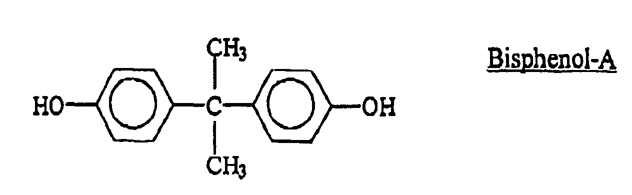

**Bisphenol-F** ist dem Fachmann ebenfalls einschlägig bekannt.

Die Verbindungen (C) können einzeln oder im Gemisch miteinander eingesetzt werden.

### Zu den Verbindung

Als **Polyamine (P)** kommen im Rahmen der vorliegenden Erfindung primäre und/oder sekundäre Amine mit mindestens zwei Stickstoffatomen und mindestens zwei aktiven Amino-Wasserstoffatomen pro Molekül zum Einsatz. Es können aliphatische, aromatische, aliphatisch-aromatische, cycloaliphatische und heterocyclische Di- und Polyamine benutzt werden. Beispiele für geeignete Polyamine (P) sind: Polyethylenamine (Ethylendiamin, Diethylentriamin, Triethylentetramin, Tetraethylenpentamin, usw.), 1,2-Propylendiamin, 1,3-Propylendiamin, 1,4.Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-ammopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine FDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexyhnethan, 4,4'-Diaminodicyclohexylmethan, 2,4'-Diaminodicyclohexylinethan, 1,3-Bis(aminomethyl)cyclohexan, die Mischung der über eine Methylenbrücke verknüpften Poly(cyclohexyl-aromischeu)amine (auch als MBPCAA, bekannt) und Polyaminoamide. Polyethylenamine, insbesondere Diethylentriamin sind besonders bevorzugt.

Die Verbindungen (P) können einzeln oder im Gemisch miteinander eingesetzt werden.

### Zur Herstellung-des Zwischenproduktes

In einer Ausführungsform setzt man bei der Herstellung des Zwischenproduktes die Verbindungen (A) und (B) in einem molaren Verhältnis von 0, 1: bis 5:1 ein.

In einer Ausführungsform stellt man bei der Herstellung des Zwischenproduktes ein molares Verhältnis der Summe der Verbindungen (A) und (B) (diese Verbindungen enthalten jeweils zwei Oxirangruppen pro Molekül) zu Verbindung C (diese Verbindung enthält zwei OH-Gruppen pro Molekül) im Bereich von 1,1:1 bis 10:1 ein. Dies ist gleichbedeutend damit, dass man das Äquivalentverhältnis von Oxiranringen in der Summe der Verbindungen (A) und (B) zu reaktiven Wasserstoffatomen der Verbindung (C) auf einen Wert im Bereich von 1,1:1 bis 10:1 einstellt.

In einer weiteren Ausführungsform, nämlich in Fällen, wo im Zuge der Herstellung des Härters auch mindestens eine Verbindung (D) eingesetzt wird, stellt man bei der Herstellung des Zwischenproduktes ein molares Verhältnis der Summe der Verbindungen (A), (B) und (D) (diese Verbindungen enthalten jeweils zwei Oxirangruppe pro Molekül) zu Verbindung C (diese Verbindung enthält zwei OH-Crruppen pro Molekül) im Bereich von 1,1:1,0 bis 10,0:1,0 ein. Dies ist gleichbedeutend damit, dass man das Äquivalentverhältnis von Oxiranringen in der Summe der Verbindungen (A), (B) und (D) zu reaktiven Wasserstoffatomen der Verbindung (C) auf einen Wert im Bereich von 1,1:1,0 bis 10,0:1,0 einstellt.

Hierzu der Eindeutigkeit halber folgende Erläuterung: Der Ausdruck "Äquivalentverhältnis" ist dem Fachmann geläufig. Der grundlegende Gedanke hinter dem Begriff des Äquivalents ist der, dass man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, dass unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, dass zwar OH-Gruppen oder NH-Gruppen solche reaktiven Gruppen darstellen, nicht aber NH₂-Gruppan, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so dass die funktionelle Gruppe NH₂ zwei reaktive Gruppen, nämlich die Wasserstoffatome, aufweist.

In einer Ausführungsform führt man die Herstellung des Zwischenproduktes in Gegenwart eines Katalysators durch, insbesondere Triphenylphosphin oder Ethyltriphenylphosphoniumiodid. Dabei beträgt die Menge des Katalysators etwa 0,01 bis 1,0 Gew.-% - bezogen auf die Gesamtmenge der Verbindungen (A), (B) und (C).
Die Epoxidzahl (%EpO) des Zwischenproduktes liegt vorzugsweise unterhalb von 10% EpO, insbesonder unterhalb von < 5% EpO. Die Definition der Epoxidzahl und die Einzelheiten der analytischen Bestimmung können dem Beispielteil dieser Anmeldung entnommen werden.

### Zur Herstellung des Härters (H)

Zur Herstellung des Härters wird wie schon gesagt das Zwischenprodukt mit einem Polyamin (P) umgesetzt.

In einer Ausführungsform setzt man das Zwischenprodukt und das Polyamin (P) in solchen Mengen ein, dass das Äquivalentverhältnis der reaktiven H-Atome an den A-minostickstoffatomen von (P) zu den Oxirangruppen in der Zwischenverbindung im Bereich von 4:1 bis 100:1 liegt.

Die Umsetzung des Zwischenproduktes mit dem Polyamin wird vorzugsweise so durchgeführt, dass das Polyamin im Überschuss vorgelegt wird, so dass sichergestellt ist, dass im wesentlichen 1 Molekül des Polyamins, vorzugsweise Diethylentriamin, mit jeweils einer der Epoxidgruppen der Zwischenverbindung reagiert. Überschüssiges Amin kann abdestilliert werden um den Gehalt an freiem Amin möglichst niedrig zu halten.

### Zur Phaseninversiuonspolymerisation (PIP)

Unter Phaseninversionspolymerisation (PIP) ist folgendes zu verstehen: Man stellt zunächst eine wäßrige Emulsion des Epoxidharzes (E) in Wasser her, wobei der amphiphile Epoxidharzhärter (H) als Emulgator fungiert. Dieses System - nachfolgend auch als Reaktionssystem bezeichnet - ist zunächst als Öl-in-Wasser-Emulsion (O/W-Emulsion) anzusprechen. Bei der Öl-Komponente dieser O/W-Emulsion handelt es sich selbstverständlich um das Epoxidharz.
Während der nun folgenden Umsetzung von Harz und Härter (Aushärtung im Sinne einer Polyaddition) kommt es zu einer Phaseninversion, d.h. das Reaktionssystem verändert sich von einer Emulsion des Typs O/W zu einer solchen des Typs W/O, in der Wasser als innere Phase von dem aushärtenden Polymer umschlossen wird. Dies liegt daran, dass sich im Zuge der Aushärtung die ursprünglichen Emulgatoreigenschaften des Härters verändern, da dessen Natur sich durch Polyaddition in Richtung zunehmender Hydrophobie wandelt.

Nach vollständiger Aushärtung liegt nun eine poröse Polymermatrix vor, die in den Kavitäten der organischen Matrix die Wasserphase enthält. Die Wasserphase lässt sich gewünschtenfalls durch Trocknung entfernen, wobei luftgefüllte Kavitäten entstehen. Notwendige Bedingung dafür, dass eine Phaseninversionspolymerisation stattfindet ist, dass kein Wasser aus dem Reaktionssystem entweichen kann. Dies kann in verschiedener Weise technisch realisiert werden.
Zum einen kann das Reaktionssystem in eine abgeschlossene Form gegeben werden. Es ist auch möglich, das Reaktionssystem in ein offenes System zu geben und dann beispielsweise dafür zu sorgen, dass (a) an der Grenzfläche zur Gasphase (meist umgebende Luft) eine ausreichende Luftfeuchtigkeit herrscht, die eine Austrocknung bzw. einen Wasserverlust der oberen Schicht des Reaktionssystems verhindert oder dass (b) die Grenzfläche zur Gasphase abgedeckt wird, beispielsweise durch eine Folie. Während es sich bei den bisher beschriebenen Varianten der Durchführung der PIP sozusagen um verlustfreie Ausführungsformen handelt, besteht eine weitere Variante der PIP-Durchführung darin, das Reaktionssystem zwar in ein offenes System zu geben, jedoch keine besonderen Vorkehrungen zu treffen, um einen Wasserverlust der Grenzschicht zur Gasphase zu verhindern. In diesem Falle bildet sich in dieser Grenzschicht durch Wasserverlust eine dichte, chemikalienresistente Struktur (die als Klarlack angesprochen werden kann), die eine Wasser-Barriere für den darunter befindlichen Teil des Reaktionssystems bildet, so dass in dieser ungehindert die PIP stattfinden kann. Nach vollständiger Härtung des Reaktionssystems kann man dann die dichte, chemikalienresistente Schicht (die in der Regel 0,1 bis 0,3 mm dick ist), durch mechanisches Abtragen beseitigen.

Dass es sich bei den ausgehärteten Systemen um nanoporöse Strukturen handelt ist bereits optisch daran zu erkennen, dass die erhaltenen Materialien nicht klar sind, sondern weiß.

In einer bevorzugten Ausführungsform wird die PIP so durchgeführt, dass Epoxidharz (E) und Härter (H) in einem Äquivalentverhältnis von 2 : 1 bis 1 : 2 eingesetzt werden. Dabei sind (E) zu (H) Äquivalentverhältnisse von 1 : 1 besonders bevorzugt.

Die PIP ist gekennzeichnet durch eine einleitende Phase, bei der eine O/W-Emulsion vorliegt und eine Aushärtephase, deren beginn mit der Bildung der W/O-Emulsion anzusetzen ist. Die PIP kann bei 0 bis 100% Luftfeuchte durchgeführt werden. Der Wassergehalt des PIP-Reaktionssystems kann im Bereich von 95 bis 20 Gew.-% (bezogen auf das gesamte Reaktionssystem) variiert werden.

Gewünschtenfalls können dem Reaktionssystem auch Verdicker zugesetzt werden.

Die Aushärtung des Reaktionssytems kann in einem breiten Temperaturbereich durchgeführt werden, vorzugsweise zwischen 1°C und 99°C und insbesondere zwischen 5 °C und 60 °C.

Wie bereits ausgeführt, enthält der erfindungsgemäße Verbund-Werkstoff die Komponenten (i) und (ii) in der Weise, dass die Komponente (ii) in eine Matrix aus der Komponente (i) eingebunden ist, wobei es bevorzugt ist, die Komponente (ii) im Zuge der Herstellung der Komponente (i) durch Phaseninversionspolymerisation einzubringen. Dies bedeutet, dass die Komponente (ii) - also Fasern und/oder Füllstoffe - dem PIP-Reaktionssystem, das auf die Herstellung der Komponente (i) zielt, zugesetzt wird.

Beispiele geeigneter Substanzen der Komponente (ii) sind insbesondere:
- Als Füllstoffe: mineralische Materialien wie zelluläre, geschlossen- oder offenzellige, mineralische Strukturen (z.B. Mineralschäume, wie Mineralschaumplatten der Firma Sto) oder Ytong-Steine in zerkleinerter Form, Vermiculit sowie andere Tonmineralien, oder andere poröse Gesteine, sowie Blähglas-Granulate (Perlite), ganische Füllstoffe wie z.B. Carbon-Nanotubes der Fa. Bayer, Sipermate der Fa. Degussa, Kieselsäuren, Silica, Zeolithe;
- als Fasern: Glasfasern, aber auch natürliche Fasern wie Sepiolith und Wollastonit.

### Beispiele

### Abkürzungen

Im Folgenden bedeuten:
- EEW = Epoxidäquivalentgewicht (wie oben beschrieben).
- MW = mittleres Molekulargewicht
- UPM = Umdrehungen pro Minute
- % = Gewichtsprozent, sofern nicht explizit anders angegeben

### Verwendete Rohstoffe

Epoxidharz (E): Chem Res E20 (Cognis GmbH)
Härter (H): es wurde folgender Härter H1 hergestellt:

### Härter H1

44g Poly(propylenglycol)-diglycidylether (EEW: 326 und MW: 652) wurden bei 20 Grad Celsius mit 46,2g Bisphenol-A-diglycidylether (Chemres E20 der Fa. Cognis EEW: 194), 14,0g Bisphenol A und 0,1g Triphenylphosphin gemischt. Die so erhaltene Mischung wurde auf 160°C erhitzt und bei dieser Temperatur über ca. 3,5 Stunden gerührt, bis die Epoxidzahl 3,95% betrug. Anschließend wurde auf 60°C abgekühlt und bei dieser Temperatur 121,4g Diethylentriamin hinzugefügt. Nach Abklingen der Exothermie wurde die Reaktionsmischung erneut für 2 Stunden auf 160°C erhitzt.
Der Überschuss an Diethylentriamin wurde im Vakuum (bis 200°C Sumpftemperatur und Drucken kleiner 10 mbar) abdestilliert, bis kein freies Amin mehr überdestillierte. Die Mischung wurde anschließend auf 90°C abgekühlt und unter gutem Rühren mit 89,5g Wasser versetzt.
Es wurden 205,6g einer klaren bernsteinfarbigen Flüssigkeit erhalten mit einer Viskosität (in Substanz, Brookfield, 10Upm, 40°C) von 2140 mPas, einem Feststoffgehalt von 60% und einer Aminzahl von 134.

### Anwendungsbeispiel

Epoxidharz (E) und Härter (H) wurden in einem Rührbecher (Durchmesser 95mm, Höhe 120mm) vorgelegt und mit einem Pendraulikrührer Typ LM34 bei Stufe 1 (ca. 465 Umdrehungen/Minute) voremulgiert. Die eingesetzte Menge an (E) und (H) sind Tabelle 1 zu entnehmen. Eine homogene Weißfärbung zeigte eine entsprechende Homogenisierung an. Anschließend erfolgte portionsweise die Wasserzugabe (die jeweilige Wassermenge ist Tabelle 1 zu entnehmen). Die Rührgeschwindigkeit wurde so angepasst, dass sich gerade kein Thrombus mehr bildete. Nach 5 min. Homogenisierung wurde der Füllstoff vorsichtig mit einem Spatel in die vorbereitete Emulsion eingerührt. Die Gesamtzeit vom Voremulgieren bis zur Verarbeitung betrug ca. 7 Minuten. Der Versuch wurde mit einem Äquivalentverhältnis Epoxidharz zu Härter von 1 : 1 durchgeführt.

Einzelheiten zu dem Beispiel 1 können der Tabelle 1 entnommen werden.

### Probenvorbereitung

Die Platte für die Wärmeleitfähigkeitsmessung wurde in einer Teflonform, beschichtet mit dem Trennmittel Loxiol G40 (Fa. Cognis), hergestellt. Die Gussmasse wurde bis zur Entformung abgedeckt, jedoch nicht Luftdicht verschlossen. Der Prüfkörper wurde nach 48h entformt, die Trocknung benötigte bei 55°C ca. 48h.

### Warmeleitfähiskeitsmessung

Die Wärmeleitfähigkeit wurde nach ISO 8301 gemessen, dies entspricht der Wärmefluss-Messmethode. Die Plattenmaße betrugen 150mm x 150mm, die Schichtdicke variierte zwischen 20mm und 25mm. Zur Messung wurde eine Messapparatur der Firma NETZSCH Typ HFM 436/3/1E verwendet, der Anpressdruck lag bei 65N. Als Messtemperatur wurde 10°C mit einer Temperaturdifferenz von 20K gewählt. Dies ist eine Standardmessung für Wärmedämmstoffe. Die Probe wurde vor der Messung mindestens 72h bei Raumtemperatur gelagert, eine spezielle Lagerung bei Normklima fand nicht statt.

**Tabelle 1- Beispiele:**

| | **Beispiel 1** |
|---|---|
| Härter H1 [g] | 125 |
| Chem Res E20 [g] | 113,1 |
| Mineralschaum, zerkleinert | 89,4 |
| Wasser, v.e. + 1 % Bentone EW [g] | 1015,9 |
| Bindemittelgebalt [%] | 15,0 |
| Aushärtungstemperatur | 55°C |
| Dichte [g/cm³] | 0,17 |
| Wärmeleitfähigkeit [W/m*K] | 0,039 |

| | |
|---|---|
| Hinweise: (1) Die Zeile "Bindemittelgehalt" dient lediglich der Information. Unter Bindemittel ist hier einfach das Umsetzungsprodukt von Härter H1 und Epoxidharz (Chem Res B20) zu verstehen. Der Bindemittelgehalt ist dementspreohend der prozentuelle Anteil des so definierten Bindemittels am Gesamtsystem. Exemplarisch sei die Berechnung des Bindemittelgehalts für Beispiel 1 demonstriert: Da die Reaktion von Epoxidharz mit Aminhärter (Härter H1) als Polyaddition ohne Abspaltung von Molekülteilen erfolgt, sind die Massenanteile von Harz und Härter zu addieren, um die Menge des resultierenden Bindemittels zu erhalten; Das eingesetzte Epoxidharz Chemres E 20 ist zu 100% zu berücksichtigen (113,1). Vom eingesetzten Härter H1 sind, da er einen Feststoffgehalt von 60% aufweist, lediglich 0,6 x 125,0g = 75,0g zu berücksichtigen. Daraus ergibt sich die Menge des Bindemittels im System zu 75,0g + 113,1g = 188,1g. Das Gesamtsystem enthält zusätzlich 1015,9 g Wasser, umfaßt mithin eine Gesamtmenge von 125g+113,1g+1015,9g-1254g. Der Bindemittelanteil im Gesamtsystem ergibt sich daraus wie folgt % Bindemittel- 188,1 x 100 / 1254 = 15,00%. (2) v.e, bedeutet "vollentsalzt" | |

## Patentansprüche

1. Verbund-Werkstoff, enthaltend (i) einen nanoporösen Polymerschaumstoff, erhältlich durch Umsetzung von ein oder mehreren Epoxidharzen mit einem oder mehreren amphiphilen Epoxidharzhärtem in Wasser im Sinne einer Phaseninversionspolymerisation, und (ii) ein oder mehrere anorganische Füllstoffe und/oder anorganische Fasern, mit der Maßgabe, dass Glashohlkugeln als Füllstoffe ausgeschlossen sind, und der Maßgabe, dass die Komponente (ii) wärmeisolierende Eigenschaften aufweist und der Maßgabe, dass man solche Epoxidharzhärter einsetzt, die erhältlich sind, indem man eine Mischung enthaltend
(A) mindestens ein epoxidiertes Polyalkylenoxid, ausgewählt aus der Gruppe der epoxidierten Polyethylenoxide, der epoxidierten Polypropylenoxide und der Polyethylenpropylenoxide,
(B) mindestens eine epoxidierte aromatische Hydroxyverbindung ausgewählt aus der Gruppe der Bisphenol-A-Epoxide und der Bisphenol-F-Epoxide und
(C) mindestens einee aromatische Hydroxyverbindung, ausgewählt aus der Gruppe Bisphenol-A und Bisphenol-F
zu einem Zwischenprodukt umsetzt und dieses Zwischenprodukt anschließend mit einem Polyamin (P) umsetzt, und ferner der Maßgabe, dass der Verbund-Werkstoff die Komponenten (i) und (ii) in der Weise enthält, dass die Komponente (ii) in eine Matrix aus der Komponente (i) eingebunden ist.

2. Verbund-Werkstoff nach Anspruch 1, wobei man als Polyamin (P) Diethylentriamin einsetzt.

3. Verbund-Werkstoff Anspruch 1 oder 2, wobei man als Verbindungen (A) epoxidierte Polypropylenoxide einsetzt.

4. Verbund-Werkstoff nach einem der Ansprüche 1 bis 3, wobei man als Verbindungen (B) Bisphenol-A-Epoxide einsetzt.

5. Verbund-Werkstoff nach einem der Ansprüche 1 bis 4, wobei man als Verbindung (C) Bisphenol-A einsetzt.

6. Verbund-Werkstoff nach einem der Ansprüche 1 bis 5, wobei der Verbundwerkstoff die Komponente (ii) in einer Menge im Bereich von 2 bis 90 Vol.-% - bezogen auf das Gesamtvolumen des Verbund-Werkstoffes - enthält.

7. Verbund-Werkstoff gemäß einem der Ansprüche 1 bis 6, wobei ein oder mehrere Additive aus der Gruppe der Brandschutzadditive, Hydrophobierungsmittel und Biozide in den Verbund-Werkstoff integriert sind.

8. Verwendung des Verbund-Werkstoffes gemäß einem der Ansprüche 1 bis 7 als Wärmedämm-Materialien bei Transportmitteln und im Industrie- und Anlagenbau.

## Claims

1. A composite material comprising (i) a nanoporous polymer foam which can be obtained by reacting one or more epoxy resins with one or more amphiphilic epoxy resin hardeners in water in a phase inversion polymerization, and (ii) one or more inorganic fillers and/or inorganic fibers, with the proviso that hollow glass beads are excluded as fillers and the proviso that component (ii) has heat-insulating properties and the proviso that epoxy resin hardeners which can be obtained by reacting a mixture comprising
(A) at least one epoxidized polyalkylene oxide selected from the group consisting of epoxidized polyethylene oxides, epoxidized polypropylene oxides and polyethylene-propylene oxides,
(B) at least one epoxidized aromatic hydroxyl compound selected from the group consisting of bisphenol A epoxides and bisphenol F epoxides and
(C) at least one aromatic hydroxyl compound selected from the group consisting of bisphenol A and bisphenol F
to form an intermediate and subsequently reacting this intermediate with a polyamine (P) are used, and furthermore the proviso that the composite material comprises the components (i) and (ii) in such a way that the component (ii) is embedded in a matrix of the component (i).

2. The composite material according to claim 1, wherein diethylenetriamine is used as polyamine (P).

3. The composite material according to claim 1 or 2, wherein epoxidized polypropylene oxides are used as compounds (A).

4. The composite material according to any of claims 1 to 3, wherein bisphenol A epoxides are used as compounds (B).

5. The composite material according to any of claims 1 to 4, wherein bisphenol A is used as compound (C).

6. The composite material according to any of claims 1 to 5, wherein the composite material comprises component (ii) in an amount in the range from 2 to 90% by volume, based on the total volume of the composite material.

7. The composite material according to any of claims 1 to 6, wherein one or more additives selected from the group consisting of flame retardant additives, hydrophobicizing agents and biocides are integrated into the composite material.

8. The use of the composite material according to any of claims 1 to 7 as thermal insulation materials in transport means and in industrial and plant construction.

## Revendications

1. Matériau composite, contenant (i) une mousse polymère nanoporeuse, pouvant être obtenue par mise en réaction d'une ou plusieurs résines époxy avec un ou plusieurs durcisseurs amphiphiles pour résines époxy, dans de l'eau, dans le sens d'une polymérisation avec inversion de phase, et (ii) une ou plusieurs charges inorganiques et/ou fibres inorganiques, étant entendu que des sphères creuses de verre sont exclues en tant que charges, et étant entendu que le composant (ii) présente des propriétés thermo-isolantes et étant entendu qu'on utilise des durcisseurs pour résines époxy qui peuvent être obtenus par mise en réaction d'un mélange contenant
(A) au moins un polyoxyalkylène époxydé, choisi dans le groupe des polyoxyéthylènes époxydés, des polyoxypropylènes époxydés et des polyoxyéthylène-propylènes,
(B) au moins un composé hydroxylé aromatique époxydé choisi dans le groupe des époxydes de bisphénol A et des époxydes de bisphénol F et
(C) au moins un composé hydroxylé aromatique, choisi dans le groupe constitué par le bisphénol A et le bisphénol F
pour l'obtention d'un produit intermédiaire et ensuite on fait réagir ce produit intermédiaire avec une polyamine (P), et étant en outre entendu que le matériau composite contient les composants (i) et (ii) de telle façon que le composant (ii) est incorporé dans une matrice à base du composant (i).

2. Matériau composite selon la revendication 1, dans lequel on utilise comme polyamine (P) la diéthylènetriamine.

3. Matériau composite selon la revendication 1 ou 2, dans lequel on utilise comme composés (A) des polyoxypropylènes époxydés.

4. Matériau composite selon l'une quelconque des revendications 1 à 3, dans lequel on utilise comme composés (B) des époxydes de bisphénol A.

5. Matériau composite selon l'une quelconque des revendications 1 à 4, dans lequel on utilise comme composé (C) le bisphénol A.

6. Matériau composite selon l'une quelconque des revendications 1 à 5, le matériau composite contenant le composant (ii) en une quantité dans la plage de 2 à 90 % en vol., par rapport au volume total du matériau composite.

7. Matériau composite selon l'une quelconque des revendications 1 à 6, dans lequel un ou plusieurs additifs choisis dans le groupe des additifs ignifuges, agents d'hydrophobisation et biocides sont intégrés dans le matériau composite.

8. Utilisation du matériau composite selon l'une quelconque des revendications 1 à 7, en tant que matériaux d'isolation thermique dans des moyens de transport et dans la construction industrielle et d'installations.
